# FASCICULE DE BREVET EUROPEEN

(11) **EP 1 363 787 B1**
(45) Date de publication et mention de la délivrance du brevet: **13.10.2004**
(21) Numéro de dépôt: 02708438.3
(22) Date de dépôt: 01.03.2002
(51) Int. Cl.: B42D 1/00, B42D 15/10, G06K 19/06, G06K 19/16

(54) **PROCEDE DE PRODUCTION EN SERIE D'OBJETS SECURISES ET MACHINE DE MISE EN OEUVRE**
MASSENHERSTELLUNGSVERFAHREN FÜR SICHERHEITSGEGENSTÄNDE UND MASCHINE ZUR DURCHFÜHRUNG DES VERFAHRENS
METHOD FOR MASS PRODUCTION OF SECURE OBJECTS AND MACHINE THEREFOR

(30) Priorité: 02.03.2001 FR 0102901
(43) Date de publication de la demande: 26.11.2003
(73) Titulaire: Thales, 75008 Paris (FR)
(72) Inventeur: AGERON, Jérôme, Thales Intellectual Property, F-94117 Arcueil Cedex (FR); GUIONNET, Sébastien, Thales Intellectual Property, F-94117 Arcueil Cedex (FR); ROBIN, Philippe, Thales Intellectual Property, F-94117 Arcueil Cedex (FR); BRICOT, Claude, Thales Intellectual Property, F-94117 Arcueil Cedex (FR); DELAPLACE, Anne, Thales Intellectual Property, F-94117 Arcueil Cedex (FR)
(74) Mandataire: Chaverneff, Vladimir
(86) Numéro de dépôt international: PCT/FR2002/000758
(87) Numéro de publication internationale: WO 2002/070275

(56) Documents cités:
- WO-A-93/18924
- DE-A- 4 131 964

## Description

La présente invention se rapporte à un procédé de production en série d'objets sécurisés, ainsi qu'à une machine de mise en oeuvre de ce procédé.

Les éléments de sécurité utilisés pour authentifier les documents d'identité sont généralement des éléments impersonnels (figures holographiques quelconques ...) et récurrents (les mêmes pour toute une grande série de documents). Ils sont donc peu efficaces dans la lutte contre les falsifications et les contrefaçons. Par exemple, on retrouve sur toutes les cartes de crédit le même hologramme, représentant le même motif. Dans le cas des cartes d'identité, on retrouve toujours les mêmes motifs sensibles aux ultraviolets. La falsification ou la contrefaçon est alors facile, dès que l'on ne dégrade pas ces éléments de sécurité ou que l'on se les procure.

La personnalisation des éléments de sécurité réduit considérablement les possibilités de falsification et rend la contrefaçon très difficile. Un élément de sécurité personnalisé est un composant reprenant une information de la carte. Toute modification d'une information contenue à la fois sur la carte et dans l'élément de sécurité, un nom ou un numéro par exemple, doit s'accompagner de la modification correspondante de l'élément de sécurité. Par conséquent, il est alors nécessaire de contrefaire non seulement cet élément, mais aussi son environnement : il faut disposer de la matière première de son support et des compétences techniques pour le reproduire.

Les éléments de sécurité optiques, en particulier les hologrammes, sont les plus efficaces contre la falsification et la contrefaçon. En effet, l'hologramme, grâce à ses propriétés physiques, possède le double avantage de ne pouvoir être copié par reprographie (à l'aide de « toner ») ou autre procédé de photocopie, et d'avoir un effet visuel fort. Cependant, on ne sait pas encore actuellement personnaliser en temps réel des hologrammes. Les hologrammes connus sont soit des hologrammes estampés, soit des hologrammes de volume enregistrés dans l'épaisseur de matériaux photosensibles de type argentique. Dans ces deux cas, le procédé d'enregistrement fait appel à des techniques non compatibles avec les procédés industriels de fabrication de cartes. Par exemple, la révélation des hologrammes de volume enregistrés dans des métaux argentiques nécessite l'emploi et la manipulation de produits chimiques liquides.

Par ailleurs, on sait enregistrer en temps réel des hologrammes grâce à l'utilisation de nouveaux matériaux photosensibles de type photopolymère, et ce, en ayant recours à des méthodes industrielles classiques. Le procédé d'enregistrement d'hologrammes avec ces nouveaux matériaux présente l'avantage d'être totalement sec, contrairement aux autres procédés précités, qu'ils fassent appel à des matériaux argentiques ou à base de gélatine bichromatée.

Un système, permettant la fabrication complète d'un document d'identité contenant un hologramme personnalisé, est un système complexe. Cette complexité rend impossible la production à l'échelle locale de ce type de document sur des machines simples. En effet, outre les modules classiques d'impression et de lamination, la machine doit comporter un module d'enregistrement d'hologrammes composé d'un émetteur laser et d'un montage optique fragile. La synchronisation de l'ensemble des modules est difficile à réaliser. De plus, l'enregistrement d'un tel composant optique impose des conditions de stabilité très contraignantes pour l'ensemble du système. Enfin, le temps d'enregistrement de l'hologramme limite considérablement le débit de production des cartes. La mise en oeuvre et la maintenance d'un tel système imposent un suivi permanent par des opérateurs qualifiés.

La présente invention a pour objet un procédé de fabrication d'objets sécurisés par des hologrammes, procédé qui puisse être mis en oeuvre à l'aide de méthodes industrielles classiques, de façon simple, en grandes séries, sans nécessiter d'opérateurs qualifiés pour son suivi, tout en produisant des documents qui soient très difficiles à falsifier ou à contrefaire.

La présente invention a également pour objet une machine de mise en oeuvre de ce procédé, machine qui soit simple et peu onéreuse, facile à utiliser et d'un entretien minimal.

Le procédé conforme à l'invention est un procédé de fabrication en série d'objets sécurisés par au moins un hologramme, et il est caractérisé par le fait qu'il consiste à pré-enregistrer pour chaque document au moins un miroir holographique dans un matériau photosensible, à personnaliser le miroir holographique en en modifiant localement la distance interfranges en fonction d'un motif spécifique en relation étroite avec au moins une partie des informations spécifiques de l'objet et/ou des personnes habilitées à détenir cet objet, à réaliser l'objet sécurisé en adjoignant à chaque objet le miroir personnalisé correspondant et à protéger au moins une partie de l'ensemble avec des dispositifs protecteurs à sécurités contre la falsification

Selon un aspect du procédé de l'invention, l'objet est un document d'identification, le motif spécifique est à chaque fois un élément caractéristique du document et de son détenteur et l'ensemble du document et de l'hologramme ou des hologrammes est protégé par un film protecteur à sécurités contre la falsification.

Selon encore un autre aspect du procédé de l'invention, la personnalisation du miroir holographique se fait en adjoignant au miroir holographique un film de matériau photosensible que l'on insole suivant un motif reprenant des informations de l'objet et de son détenteur, le miroir et le matériau étant ensuite révélés dans une enceinte thermique .

La machine conforme à l'invention comporte une première station avec des moyens de stockage et de dévidage de rouleaux de bandes à miroirs holographiques et de rouleaux de bandes de matériau photosensible, une station de personnalisation des miroirs holographiques, une station d'assemblage de documents et de miroirs correspondants et une station de lamination.

La présente invention sera mieux comprise à la lecture de la description détaillée d'un mode de mise en oeuvre, pris à titre d'exemple non limitatif et illustré par le dessin annexé, sur lequel :
- les figures 1 et 2 sont respectivement une vue de face et une vue de dessus simplifiées d'une machine de production de miroirs holographiques tels qu'utilisés par la présente invention, et ;
- la figure 3 est une vue de face simplifiée d'une machine de fabrication de documents sécurisés conforme à l'invention.

La présente invention est décrite ci-dessous en référence à la fabrication de cartes d'identité sécurisées, mais il est bien entendu qu'elle peut être mise en oeuvre pour la fabrication de divers autres objets ou documents sécurisés : cartes de crédit, cartes d'accès à des lieux protégés, passeports, et pour le marquage personnalisé d'objets de prix (produits de luxe,...).

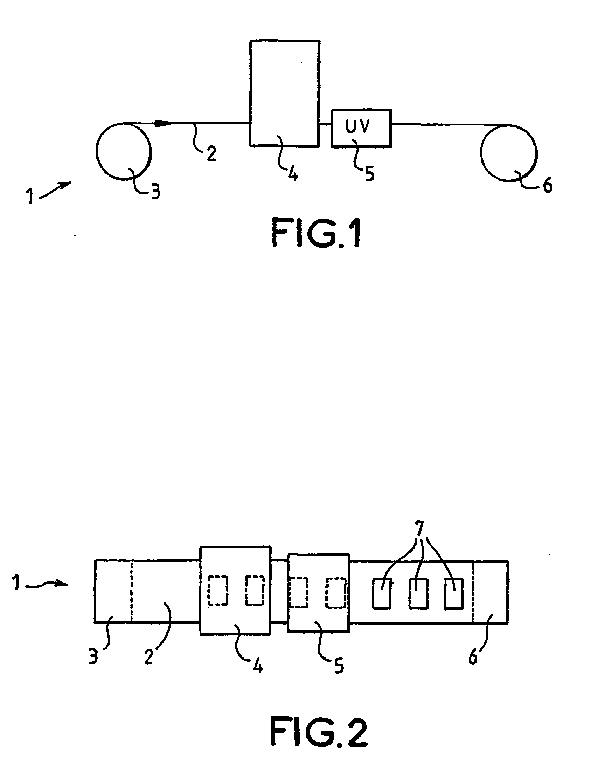

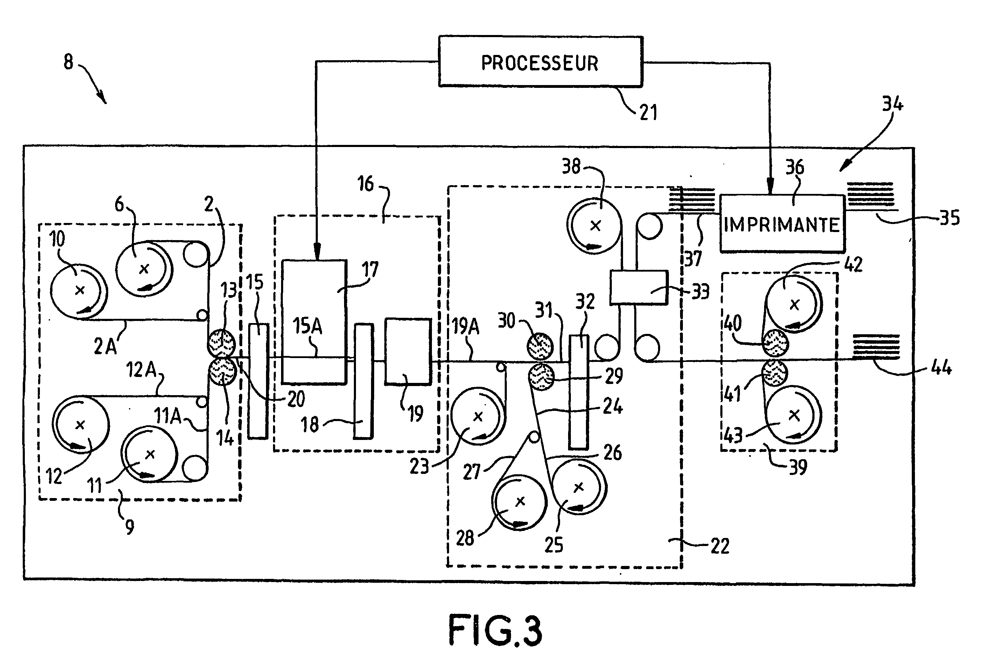

La machine décrite ci-dessous utilise en tant que dispositif de sécurisation un hologramme personnalisé en temps réel, c'est-à-dire réalisé au rythme de l'assemblage en série des documents proprement dits avec ce dispositif de sécurisation et avec les couches de protection. Le produit de départ d'un hologramme personnalisé est ici un miroir holographique. De façon préférée, ce miroir est réalisé en usine par le fabricant du matériau photosensible vierge, mais il est bien entendu que la machine de l'invention, décrite ci-dessous en référence à la figure 3, peut incorporer une station de fabrication de miroirs holographiques, connue en soi et décrite ci-dessous en référence aux figures 1 et 2.

Un miroir holographique est un réseau de franges, obtenu à partir de l'interférence entre deux faisceaux lumineux cohérents, enregistré dans le volume d'un matériau photosensible, appelé par la suite matériau M. La valeur de la distance interfranges est déterminée par la longueur d'onde de la lumière cohérente utilisée et par les conditions d'enregistrement des franges (angle entre les deux faisceaux en question). La longueur d'onde (c'est-à-dire ici la couleur) de la lumière réfléchie par l'hologramme est directement reliée à la valeur de la distance interfranges par la loi de Bragg.

De tels miroirs holographiques sont réalisés en série. Ils se présentent sous forme de petits carrés ou rectangles formés dans une bande de film photosensible vierge. Une station 1 de fabrication de tels miroirs holographiques est schématiquement représentée en figures 1 et 2. Le film photosensible vierge 2, enroulé avec une bande de support et de protection, en un rouleau 3, est mis en place dans la station 1. Le film est déroulé et passe dans un module d'enregistrement 4 où il est exposé à un système interférentiel qui crée des franges d'interférence que ce matériau enregistre dans son épaisseur. Ensuite, le film est fixé dans une station 5 et il est enfin enroulé sur un rouleau 6 de stockage. Bien entendu, des caches à ouverture rectangulaire sont disposés dans la station 4, afin de n'enregistrer à chaque fois qu'une surface rectangulaire 7 sur le film, cette surface correspondant avantageusement à celle de la vignette de sécurité que l'on désire obtenir. La station 1 étant connue en soi, ne sera pas décrite ici plus en détail.

La machine 8 de production de documents sécurisés sera décrite en référence à la figure 3. Cette machine 8 comporte une première station 9 dans laquelle on assemble par laminage le film à miroirs holographiques avec un film de matériau de personnalisation, que l'on appellera par la suite matériau P. Ce matériau P est un photopolymère spécifique qui, sous l'action de la chaleur modifie les propriétés du miroir ( il en augmente la distance interfranges et l'amplitude de la modulation d'indice de réfraction). La station 9 comporte d'abord des moyens de support destinés à recevoir le rouleau 6 d'une part, et d'autre part une bobine 10 vide (au départ) sur laquelle est enroulée, au fur et à mesure de l'utilisation du film 2, sa bande de protection 2A. La station 9 comporte ensuite un dévidoir supportant un rouleau 11 de film de matériau P, et un dévidoir supportant un bobinage 12 vide (au départ) destinée à recevoir le film 12A de protection du film 11A de matériau P. Après séparation de leurs films protecteurs respectifs, les films 2 et 11A sont amenés en contact mutuel entre deux rouleaux de pression chauffants 13, 14.

Grâce à ces rouleaux 13, 14, on réalise un film multicouches constitué des deux matériaux M et P collés entre eux et laminés entre deux films de protection (feuilles de polyester par exemple) que constituent leurs supports, les couches M et P étant, bien entendu en contact mutuel.

La station 9 est suivie d'un « moufle » 15, de type connu en soi, qui accumule une longueur variable de laminât sortant de la station 9. Ce dispositif 15 est nécessaire, car, dans les stations suivantes, décrites ci-dessous, l'avance du film laminé est continue ou discontinue, selon la station considérée, alors que l'avance du film dans la station 9 avant et juste après les rouleaux 13 et 14 doit nécessairement être continue pour assurer une bonne lamination des matériaux M et P, et elle doit également l'être dans l'enceinte thermique de la première station suivante, ainsi que lors de la lamination de l'adhésif dans la deuxième station suivante. Par contre, l'avance du film est discontinue dans la station de personnalisation et lors de la dépose de l'hologramme sur le document d'identité. Le moufle 15 ainsi que les moufles suivants, décrits ci-dessous, permettent de remplir ces exigences.

Le moufle 15 est suivi d'une station 16 de personnalisation des miroirs holographiques. La station 16 comporte un dispositif 17 de personnalisation à ultraviolets suivi d'un moufle 18 et d'une enceinte thermique 19. Dans cette station 16, le matériau P faisant partie du film multicouches 20 issu de la station 9, est inhibé suivant un motif représentant une information du document d'identité. Cette inhibition consiste à rendre plus ou moins chimiquement inactif le matériau P, dans des zones correspondant aux zones plus foncées dudit motif, par insolation aux rayons ultraviolets produits par le dispositif 17. La copie du motif en question se fait, de façon connue en soi, à l'aide d'un modulateur spatial de lumière (ou d'un dispositif de déflexion de lumière à miroirs ou à micro-miroirs) projetant le motif à reproduire. Selon le mode de mise en oeuvre préféré, ladite modification de la distance interfranges en fonction d'un motif se fait par copie homothétique du motif, mais il est bien entendu que d'autres fonctions peuvent être mises en oeuvre: transformation stéréoscopique, modifications locales du motif, cryptage,etc. Quel que soit le dispositif de copie, il est commandé en temps réel par un processeur 21 supervisant la machine 8. En variante, on pourrait d'abord insoler le matériau P, puis le laminer avec le matériau M.

Après impression du motif dans le dispositif 17, et passage par le moufle 18, le miroir holographique ainsi personnalisé de façon latente est révélé dans l'enceinte thermique 19, pendant environ 5 minutes à deux heures, à une température comprise entre 120 et 160 ° C. environ, selon la couleur souhaitée pour l'hologramme final. Suite à ce traitement thermique, le miroir holographique personnalisé est, au minimum, constitué d'une image en deux couleurs: la couleur d'origine du miroir dans les zones où le matériau P a été inhibé (pas de modification de la distance interfranges d'origine), et une seconde couleur dans les zones où cette distance interfranges a été modifiée par insolation aux rayons ultraviolets en fonction du motif utilisé. A la sortie de l'enceinte thermique 19, le film composite 19A est constitué d'une couche, contenant une série d'hologrammes personnalisés, protégée sur chacune de ses deux faces par une feuille de protection, par exemple en polyester, cette feuille étant la feuille de support des films 2 et 11A.

A la station suivante 22, on délamine le film 19A en lui enlevant l'une de ses feuilles de protection, que l'on enroule sur une bobine réceptrice 23. Aussitôt après, on applique sur la face du film 19A ainsi dénudée un film adhésif 24 afin de pouvoir ensuite le coller sur le document d'identité devant être sécurisé. A cet effet, on utilise une bobine 25 de film adhésif 26, lui-même protégé par un film protecteur, par exemple en polyester. On délamine le film protégé 26 en lui enlevant le film de protection 27 qui est en contact avec sa face qui est destinée à être appliquée sur le film 19A. Ce film 27 est enroulé sur une bobine réceptrice 28. Après ce délaminage, on obtient ledit film 24 qui est appliqué sur le film 19A grâce à deux rouleaux de pression chauffants 29, 30.

On obtient ainsi un film 31, qui passe dans un moufle 32 avant d'arriver dans un dispositif 33 de fixation des hologrammes sur les documents d'identité. Pour pouvoir faire correspondre le bon hologramme avec le bon document d'identité, l'invention prévoit d'adjoindre à chaque miroir holographique, lors de sa personnalisation dans le dispositif 17, un marquage distinctif, par exemple un code à barres. Ce marquage est imprimé dans le matériau P de façon similaire à celle mise en oeuvre pour imprimer le motif de personnalisation, sous la commande du processeur 21. On peut, par exemple disposer près du modulateur spatial de lumière (ou déflecteur à miroirs), dans le dispositif 17, un autre modulateur spatial (ou on peut utiliser un unique modulateur spatial) qui est chargé de projeter sur le film composite 20 ledit marquage distinctif, qui est ensuite révélé de la même façon que le motif personnalisé. Ce marquage est imprimé à côté du miroir holographique correspondant, sur une zone libre du film composite (les miroirs holographiques n'occupent pas la totalité de la surface du film, comme on le voit sur la figure 2). Bien entendu, le processeur 21 imprime le même code sur le document d'identité correspondant, comme expliqué ci-dessous.

Parallèlement à la réalisation des vignettes holographiques de personnalisation, on réalise dans une station 34, l'impression des documents d'identité. Les documents d'identité vierges, par exemple sous forme de feuilles individuelles, sont empilés dans le bac d'entrée 35 d'une imprimante 36. L'imprimante 36, sous la commande du processeur 21, imprime sur ces documents vierges les différentes informations nécessaires (photographie du titulaire, renseignements concemant le titulaire ...) ainsi que le code à barres correspondant à celui imprimé sur le film 15A dans le dispositif 17. Les documents ainsi imprimés sont stockés dans le bac récepteur 37 de l'imprimante. De là, les documents imprimés sont acheminés, en synchronisme avec l'arrivée du film 31, dans le dispositif 33, dans lequel les vignettes sont découpées et collées sur les documents correspondants. Le film-support restant après découpe des vignettes est enroulé sur une bobine réceptrice 38. Le dispositif 33 comporte des moyens de lecture de codes à barres et des moyens de comparaison des codes lus respectivement sur le film 31 et sur les documents provenant du bac 37, ainsi que des moyens permettant de mettre face-à-face les vignettes holographiques et les documents imprimés correspondants, de découper les vignettes et de les coller sur les documents.

Les documents, ainsi munis de leurs vignettes respectives, sont entraînés vers un poste 39 de laminage dans lequel des rouleaux de pression chauffants 40, 41 leur appliquent sur chaque face un film protecteur, avantageusement muni de sécurités appropriées (protection, connue en soi, contre les tentatives de falsification des documents par enlèvement des films protecteurs) provenant respectivement de bobines 42, 43. Les documents ainsi protégés sont stockés provisoirement dans un bac récepteur 44.

## Revendications

1. Procédé de fabrication en série d'objets sécurisés par au moins un hologramme, **caractérisé par le fait qu'**il consiste à pré-enregistrer pour chaque document au moins un miroir holographique (7) dans un matériau photosensible (2), à personnaliser le miroir holographique en en modifiant localement la distance interfranges en fonction d'un motif spécifique en relation étroite avec au moins une partie des informations spécifiques de l'objet et/ou des personnes habilitées à détenir ces objets, à réaliser l'objet sécurisé en adjoignant à chaque objet le(s) miroir(s) personnalisé(s) correspondant et à protéger au moins une partie de l'ensemble avec des dispositifs protecteurs à sécurités contre la falsification.

2. Procédé selon la revendication 1, **caractérisé par le fait que** l'objet est un document d'identification, que le motif spécifique est à chaque fois un élément caractéristique du document et de son détenteur et que l'ensemble du document et de l'hologramme ou des hologrammes est protégé par un film protecteur à sécurités contre la falsification.

3. Procédé selon la revendication 1 ou 2, **caractérisé par le fait que** la personnalisation du miroir holographique se fait en adjoignant au miroir holographique un film de matériau photosensible (11A) que l'on insole (17) suivant un motif reprenant des informations de l'objet et de son détenteur, le miroir et le matériau étant ensuite révélés dans une enceinte thermique (19).

4. Procédé selon la revendication 3, **caractérisé par le fait que** l'insolation est faite par l'intermédiaire d'un modulateur spatial de lumière

5. Procédé selon la revendication 3, **caractérisé par le fait que** l'insolation est faite par l'intermédiaire d'un système de balayage à miroir mobile.

6. Procédé selon la revendication 3, **caractérisé par le fait que** l'insolation est faite par l'intermédiaire d'un système à micromiroirs.

7. Procédé selon l'une des revendications précédentes, **caractérisé par le fait que** pour mettre en correspondance le(s) miroir(s) et l'objet approprié avant de les réunir, on munit chaque objet et chaque miroir correspondant lors de sa personnalisation d'un code spécifique d'identification, et que juste avant leur réunion mutuelle, on compare leurs codes respectifs afin de mettre à chaque fois en correspondance un document et un (des) miroir(s) personnalisé(s) ayant le même code.

8. Machine de fabrication en série de documents sécurisés à hologrammes, **caractérisée par le fait qu'**elle comporte une première station (9) avec des moyens de stockage et de dévidage de rouleaux (6) de bandes de miroirs holographiques et de rouleaux (11) de bandes de matériau photosensible, une deuxiéme station (16) de personnalisation des miroirs holographiques, comprenant un poste d'insolation (17) et une enceinte thermique (19), une troisième station d'assemblage (22) de documents et de miroirs personnalisés correspondants avec un poste (33), d'assemblage et de découpage, une unité d'impression de documents (36) et une station de lamination (39), ainsi qu'un processeur de commande et de supervision (21).

9. Machine selon la revendication 8, **caractérisée par le fait que** la station d'assemblage (22) comporte des moyens de comparaison de codes d'identification.

10. Machine selon la revendication 8 ou 9, **caractérisée par le fait qu'**elle comporte un moufle (15) entre les première (9) et deuxième (16) stations, un moufle (18) dans la deuxième station entre le poste d'insolation et l'enceinte thermique et un moufle (32) dans la troisième station, en amont du poste d'assemblage et de découpage (33).

## Patentansprüche

1. Verfahren zur Herstellung einer Reihe von Objekten, die durch mindestens ein Hologramm gesichert sind, **dadurch gekennzeichnet, dass** es darin besteht, für jedes Dokument mindestens einen holografischen Spiegel (7) aus einem lichtempfindlichen Material (2) voraufzuzeichnen, den holografischen Spiegel zu personalisieren, indem lokal sein Streifenabstand in Abhängigkeit von einem spezifischen Motiv in enger Verbindung mit mindestens einem Teil der spezifischen Informationen des Objekts und/oder der Personen, die befugt sind, diese Objekte zu besitzen, verändert wird, das gesicherte Objekt herzustellen, indem jedem Objekt der (die) entsprechende(n) personalisierte(n) Spiegel zugeordnet wird (werden), und zumindest einen Teil der Einheit mit Schutzvorrichtungen mit Fälschungssicherungen zu schützen.

2. Verfahren nach Anspruch 1, **dadurch gekennzeichnet, dass** das Objekt ein Identifikationsdokument ist, dass das spezifische Motiv jedes Mal ein charakteristisches Element des Dokuments und seines Besitzers ist und dass die Einheit des Dokuments und Hologramms oder der Hologramme durch eine Schutzfolie mit Fälschungssicherung geschützt ist.

3. Verfahren nach Anspruch 1 oder 2, **dadurch gekennzeichnet, dass** die Personalisierung des holografischen Spiegels erfolgt, indem dem holografischen Spiegel eine Folie aus einem lichtempfindlichen Material (11A) zugeordnet wird, die nach einem Motiv bestrahlt wird (17), das die Informationen des Objekts und seines Besitzers übernimmt, wobei der Spiegel und das Material dann in einer Wärmekammer (19) entwickelt werden.

4. Verfahren nach Anspruch 3, **dadurch gekennzeichnet, dass** die Bestrahlung mit Hilfe eines Raumlichtmodulators erfolgt.

5. Verfahren nach Anspruch 3, **dadurch gekennzeichnet, dass** die Bestrahlung mit Hilfe eines Abtastsystems mit beweglichem Spiegel erfolgt.

6. Verfahren nach Anspruch 3, **dadurch gekennzeichnet, dass** die Bestrahlung mit Hilfe eines Systems mit Mikrospiegeln erfolgt.

7. Verfahren nach einem der vorhergehenden Ansprüche, **dadurch gekennzeichnet, dass** für die Übereinstimmung des (der) Spiegel(s)und des geeigneten Objekts vor deren Verbindung jedes Objekt und jeder entsprechende Spiegel bei seiner Personalisierung mit einem spezifischen Identifikationscode versehen werden, und dass direkt vor ihrer wechselseitigen Verbindung ihre jeweiligen Codes verglichen werden, um jedes Mal ein Dokument und (einen) personalisierte(n) Spiegel, die denselben Code aufweisen, in Übereinstimmung zu bringen.

8. Maschine zur Herstellung von mit Hologrammen gesicherten Dokumenten in Serie, **dadurch gekennzeichnet, dass** sie eine erste Station (9) mit Mitteln zur Lagerung und zum Abwickeln von Rollen (6) mit holografischen Spiegelbändern und von Rollen (11) mit Bändern aus einem lichtempfindlichen Material, eine zweite Station (16) zur Personalisierung der holografischen Spiegel, umfassend eine Bestrahlungsstation (17) und eine Wärmekammer (19), eine dritte Station (22) zum Zusammenbau von Dokumenten und entsprechenden personalisierten Spiegeln mit einer Montage- und Schneidestation (33), eine Einheit zum Drucken von Dokumenten (36) und einer Laminierstation (39) sowie einen Steuer- und Überwachungsprozessor (21) umfasst.

9. Maschine nach Anspruch 8, **dadurch gekennzeichnet, dass** die Station (22) zum Zusammenbau Mittel zum Vergleichen von Identifikationscodes umfasst.

10. Maschine nach Anspruch 8 oder 9, **dadurch gekennzeichnet, dass** sie einen Flaschenzug (15) zwischen der ersten (9) und der zweiten Station (16), einen Flaschenzug (18) in der zweiten Station zwischen der Bestrahlungsstation und der Wärmekammer und einen Flaschenzug (32) in der dritten Station stromaufwärts zur Montage- und Schneidestation (33) umfasst.

## Claims

1. Process for the mass production of objects security-protected by at least one hologram, **characterized in that** it consists in prerecording, for each document, at least one holographic mirror (7) in a photosensitive material (2), in personalizing the holographic mirror by locally modifying the interfringe distance thereof according to a specific pattern in close relationship with at least some of the specific information of the object and/or of the persons entitled to hold these objects, in producing the security-protected object by joining the corresponding personalized mirror(s) onto each object and in protecting at least part of the assembly with security devices for protection against counterfeiting.

2. Process according to Claim 1, **characterized in that** the object is an identification document, **in that** the specific pattern is each time an element characteristic of the document and of its owner and **in that** the assembly comprising the document and the hologram or holograms is protected by a security film providing protection against counterfeiting.

3. Process according to Claim 1 or 2, **characterized in that** the personalization of the holographic mirror is accomplished by adding a film of photosensitive material (11A) onto the holographic mirror, which film is irradiated (17) in a pattern that repeats the information of the object and of its owner, the mirror and the material then being developed in a thermal enclosure (19).

4. Process according to Claim 3, **characterized in that** the irradiation is performed by means of a spatial light modulator.

5. Process according to Claim 3, **characterized in that** the irradiation is performed by means of a moving-mirror scanning system.

6. Process according to Claim 3, **characterized in that** the irradiation is performed by means of a system of micromirrors.

7. Process according to one of the preceding claims, **characterized in that**, to bring the mirror(s) into correspondence with the appropriate object before they are joined together, each object and each corresponding mirror during its personalization is provided with a specific identification code and **in that**, just before they are joined together, their respective codes are compared so as each time to bring a document into correspondence with one or more personalized mirrors having the same code.

8. Machine for the mass production of documents security-protected by holograms, **characterized in that** it comprises a first station (9) with means for storing and unwinding reels (6) of sheets of holographic mirrors and reels (11) of sheets of photosensitive material, a second station (16) for personalizing the holographic mirrors, which station comprises an irradiation unit (17) and a thermal enclosure (19), a third station (22) for assembling the documents and corresponding personalized mirrors with an assembling and cutting unit (33), a document printing unit (36) and a laminating station (39), together with a control and supervision processor (21).

9. Machine according to Claim 8, **characterized in that** the assembly station (22) includes comparison means for comparing identification codes.

10. Machine according to Claim 8 or 9, **characterized in that** it includes a muffle oven (15) between the first (9) and second (16) stations, a muffle oven (18) in the second station between the irradiation unit and the thermal enclosure, and a muffle oven (32) in the third station, upstream of the assembling and cutting unit (33).
